# EUROPÄISCHE PATENTANMELDUNG

(11) **EP 3 088 866 A1**
(43) Veröffentlichungstag der Anmeldung: **02.11.2016**
(21) Anmeldenummer: 15165252.6
(22) Anmeldetag: 27.04.2015
(51) Int. Cl.: G01N 21/27, G01N 21/64

(54) **VERFAHREN ZUM AUTOMATISCHEN KALIBRIEREN EINES OPTISCHEN MESSGERÄTES UND OPTISCHES MESSGERÄT**

(71) Anmelder: Berthold Technologies GmbH & Co. KG, 75323 Bad Wildbad (DE)
(72) Erfinder: Berthold, Fritz, 75173 Pforzheim (DE)
(74) Vertreter: Patentanwälte Ruff, Wilhelm, Beier, Dauster & Partner mbB

(57) **Zusammenfassung**

Ein Verfahren dient zum automatischen Kalibrieren eines optischen Messgerätes (1), wobei das optische Messgerät (1) eine gepulste Lichtquelle (2) aufweist. Das Verfahren weist folgende Schritte auf: Einstellen von Referenzmessbedingungen für das optische Messgerät (1), Erzeugen einer Folge von Lichtimpulsen mittels der gepulsten Lichtquelle (2), Bilden von Einzelmesswerten, wobei ein jeweiliger Einzelmesswert von einem zugehörigen Lichtimpuls der Folge von Lichtimpulsen bewirkt wird, Ermitteln einer Häufigkeitsverteilung der Einzelmesswerte oder einer Häufigkeitsverteilung von normierten Einzelmesswerten und Verändern einer Stellgröße (US) des optischen Messgeräts (1) in Abhängigkeit von der ermittelten Häufigkeitsverteilung derart, dass eine auf der veränderten Stellgröße basierende Häufigkeitsverteilung der Einzelmesswerte oder der normierten Einzelmesswerte einer Referenz-Häufigkeitsverteilung entspricht.

## Beschreibung

Die Erfindung betrifft ein Verfahren zum automatischen Kalibrieren eines optischen Messgerätes und ein optisches Messgerät.

Die Messung von prompter Fluoreszenz mit gepulsten Lichtquellen im Mikrosekundenbereich kann nicht mit einem Photon Counter erfolgen, sondern erfordert einen analog arbeitenden Detektor, wobei entweder ein Integrator oder ein Impulshöhenanalysator in Frage kommt.

Als Sensor dient meist ein Photomultiplier. Wird dieser beispielsweise als Impulshöhenanalysator betrieben, ist das Integral des Ausgangsstroms des Photomultipliers der Intensität des an der Kathode auftreffenden Lichtsignals proportional. Der Ausgangsstrom kann beispielsweise mit einem Transimpedanz-Verstärker in eine Signalspannung umgewandelt und diese dann linear weiter verarbeitet (verstärkt und gefiltert) werden. Wird diese analoge Signalverarbeitung mit einer Analogelektronik betrieben, so ist der Detektor im Gegensatz zu einem Photon Counter relativ driftempfindlich und muss daher regelmäßig überwacht und rekalibriert werden.

Ein komplettes optisches Messgerät in Form eines Fluoreszenz-Messsystems, z. B. ein Mikroplatten-Fluorometer oder ein Multilabel-Reader, hat neben dem optischen Detektor noch weitere Komponenten, welche driften oder sich im Lauf der Zeit verändern können, nämlich die Lichtquelle sowie passive Elemente wie Spiegel, Linsen, Gitter, usw.

Außerdem ist der dynamische Bereich von analog arbeitenden Systemen begrenzt. Zwar gibt es Möglichkeiten zur Messbereichserweiterung, beispielsweise unter Verwendung verschiedener Abgriffe am Arbeitswiderstand des Photomultipliers und nachfolgender paralleler Signalaufbereitung und Digitalisierung in typisch zwei Kanälen, wobei der gültige Messwert einem Kanal entnommen wird, welcher nicht übersteuert ist. In vielen Fällen kann auf diese Weise mit einer einzigen Hochspannungseinstellung gearbeitet werden, doch reicht dies häufig nicht aus und es wird eine Veränderung der Verstärkung des Photomultipliers durch Veränderung der angelegten Hochspannung erforderlich.

Der Erfindung liegt die Aufgabe zugrunde, ein Verfahren zum automatischen Kalibrieren eines optischen Messgerätes und ein optisches Messgerät zur Verfügung zu stellen, die das gesamte optische System des optischen Messgeräts automatisch oder auf einen einfachen Befehl hin für beliebig einstellbare Messbereiche kalibrieren können.

Die Erfindung löst diese Aufgabe durch ein Verfahren nach Anspruch 1 sowie durch ein optisches Messgerät nach Anspruch 13.

Das Verfahren dient zum automatischen Kalibrieren eines optischen Messgerätes, insbesondere eines optischen Fluoreszenz-Messsystems, wie beispielsweise ein Mikroplatten-Fluorometer oder ein Multilabel-Reader. Das optische Messgerät weist eine gepulste Lichtquelle auf.

Ein Kalibriervorgang weist folgende Verfahrensschritte auf:
In einem ersten Verfahrensschritt werden Referenzmessbedingungen für das optische Messgerät hergestellt.

Danach wird, insbesondere für bzw. während einer vorgegebenen Kalibrierzeitdauer, bei Vorliegen der Referenzmessbedingungen eine Folge von Lichtimpulsen mittels der gepulsten Lichtquelle erzeugt.

Es werden Einzelmesswerte gebildet, wobei ein jeweiliger Einzelmesswert von einem zugehörigen Lichtimpuls der Folge von Lichtimpulsen bewirkt wird. Die Einzelmesswerte werden bevorzugt mittels Impulshöhenmessung gewonnen, d.h. ein jeweiliger Messwert wird von einer Höhe eines zugehörigen Messimpulses bestimmt.

Es wird, beispielswiese fortlaufend, während der Kalibrierzeitdauer, ein, beispielsweise gleitender, Mittelwert über eine Anzahl (2 bis 1000) der Einzelmesswerte oder über eine Anzahl von normierten Einzelmesswerten gebildet. Anstelle des Mittelwerts als eine einfache Ausprägung einer Häufigkeitsverteilung kann allgemeiner eine beliebige Häufigkeitsverteilung der Anzahl von (normierten) Einzelmesswerten ermittelt werden.

Eine oder mehrere häufigkeitsverteilungsbestimmende bzw. mittelwertbestimmende Stellgröße(n) des optischen Messgeräts wird/werden in Abhängigkeit von der ermittelten Häufigkeitsverteilung bzw. von dem gebildeten Mittelwert derart eingestellt, dass eine bei veränderter Stellgröße neu ermittelte Häufigkeitsverteilung einer Referenz-Häufigkeitsverteilung entspricht bzw. dass ein bei veränderter Stellgröße neu gebildeter Mittelwert einem vorgegebenen Referenz-Mittelwert entspricht. Hierzu kann beispielsweise die Stellgröße in Abhängigkeit von einer Differenz zwischen dem gebildeten Mittelwert und dem Referenzwert eingestellt bzw. justiert werden, falls eine solche Differenz vorhanden ist. Wenn keine Differenz vorhanden ist oder wenn die Differenz innerhalb vorgegebener Grenzen ist, kann die Stellgröße unverändert bleiben. Das Einstellen der Stellgröße kann mittels einer Regelschleife bzw. eines Reglers erfolgen, wobei der Istwert der Regelschleife der (fortlaufend neu gebildete oder gleitend gebildete) Mittelwert ist und der Referenz-Mittelwert der Sollwert der Regelschleife ist.

Die Referenzmessbedingungen können dadurch eingestellt werden, dass ein erster optischer Detektor des optischen Messgeräts mit Licht mit einer Referenzintensität beaufschlagt wird, wobei ein jeweiliger Einzelmesswert von einem mittels des ersten optischen Detektors erzeugten Messsignal abhängig ist.

Die Referenzintensität kann mittels einer Referenz-Fluoreszenzprobe bzw. eines Fluoreszenzstandards erzeugt werden, wobei die Referenz-Fluoreszenzprobe mit der Folge von Lichtimpulsen angeregt wird, wobei das aufgrund der Anregung durch die Referenz-Fluoreszenzprobe emittierte Licht am ersten optischen Detektor die Referenzintensität aufweist bzw. erzeugt.

Alternativ oder zusätzlich kann die Referenzintensität mittels eines Streukörpers erzeugt werden, wobei der Streukörper mit der Folge von Lichtimpulsen beaufschlagt wird, wobei das mittels des Streukörpers gestreute Licht am ersten optischen Detektor die Referenzintensität aufweist bzw. erzeugt.

Der erste optische Detektor kann ein Photomultiplier (PMT) oder ein Silizium-Photomultiplier (SiPM) sein, wobei die Stellgröße für diesen Fall eine Versorgungsspannung des Photomultipliers bzw. eine Biasspannung des Silizium-Photomultipliers sein kann.

Alternativ oder zusätzlich kann die Stellgröße eine Versorgungsspannung der gepulsten Lichtquelle oder ein Verstärkungsfaktor eines elektronischen Signalverstärkers sein. Weiter alternativ kann die Stellgröße eine Spalteinstellung eines Monochromators sein. Es können auch verschiedene Stellgrößen kombiniert werden.

Erfindungsgemäß kann im optischen Pfad zwischen gepulster Lichtquelle, einer Probenposition und dem ersten optischen Detektor zum Zwecke der Kalibrierung an geeigneter Stelle ein stabiler Fluorophor oder ein optischer Streukörper eingebracht werden, so dass eine Referenzintensität von Licht auf den ersten optischen Detektor fällt. Die geeignete Stelle ist vorzugsweise die Messposition, an der typisch eine zu messende Probe positioniert ist. Der Streukörper kann in einer Mikroplatte angeordnet sein, welche der Benutzer zum Zwecke der Kalibrierung in das optische Messgerät einlegt. Der Streukörper bzw. die Referenz-Fluoreszenzprobe kann auch fest im Gerät oder auf dem die Mikroplatte tragenden Unterbau befestigt sein und zur Kalibrierung in Messposition gebracht werden.

Die Stabilität der relevanten optischen Eigenschaften des Streukörpers kann regelmäßig überprüft werden. Bei Verwendung eines Streukörpers wird die selektierte Wellenlänge im Anregungspfad vorzugsweise dieselbe sein wie im Emissionspfad, während bei einer Fluoreszenzprobe die selektierte Wellenlänge im Emissionspfad vorzugsweise grösser als diejenige des Anregungspfads gewählt wird, entsprechend dem Stokes-Shift. Der Vorteil eines Streukörpers gegenüber einem Fluoreszenzstandard würde darin bestehen, dass ein einziger Streukörper universell für alle Wellenlängen, welche ja durch Monochromatoren oder Filter bestimmt werden, einsetzbar wäre, während bei Fluoreszenzproben u.U. ein ganzer Satz vorgehalten werden müsste.

Nun wird ein Zielwert bzw. Referenzwert für das Ausgangssignal des ersten optischen Detektors vorgegeben. Dieser Zielwert bzw. Referenzwert (auch als Referenz-Häufigkeitsverteilung oder Referenz-Mittelwert bezeichnet) kann erreicht werden über Stellglieder, welche die Signalverstärkung beeinflussen, beispielsweise die Hochspannung, mit der ein Photomultiplier betrieben wird. Andere Stellglieder bzw. Stellgrößen sind die Versorgungsspannung der Lichtquelle oder ein Verstärkungsfaktor eines elektronischen Signalverstärkers. Außerdem können auch Spalteinstellungen von Monochromatoren als Stellglieder bzw. Stellgrößen dienen. Beispielsweise kann durch die Spalteinstellungen des Anregungsmonochromators die Intensität des Anregungslichtes reguliert werden, während die Intensität des Emissionslichtes durch die Spalteinstellungen des Emissionsmonochromators kontrolliert werden kann.

Wegen statistischer und anderer Schwankungen wird der Referenzwert in der Regel nicht exakt erreicht werden. Es kann daher eine größere Anzahl von Wiederholungsmessungen durchgeführt werden, wobei die Messergebnisse nach dem Kriterium einsortiert werden, ob sie unteroder oberhalb des Referenzwerts liegen. Das Einstellen der Stellgröße erfolgt bevorzugt nicht nach jedem einzelnen Lichtimpuls bzw. Lichtblitz, sondern es werden Zwischenergebnisse in Form von Mittelwerten über eine statistisch ausreichende Anzahl von Einzelmesswerten gebildet. In Abhängigkeit vom Grad der Abweichung des derart gebildeten Mittelwerts vom Referenzwert wird die Stellgröße nachgestellt. Wenn die Einzelmesswerte einer Gauss-Verteilung oder eine anderen symmetrischen Verteilung folgen, so wird der Referenzwert bei demjenigen Wert der Stellgröße erreicht, bei welchem ebenso viele Einzelmesswerte oberhalb wie unterhalb des Referenzwerts liegen. Da man für jeden Zeitraum die Gesamtzahl der Einzelmesswerte kennt, reicht auch aus, dass nur eine bestimmte Zahl von Einzelmesswerte beispielsweise gleich oder grösser als der Referenzwert sein soll. Die Stellgröße wird so lange verändert, bis die Häufigkeitsverteilung der Einzelmesswerte dem gewünschten Ergebnis entspricht, also entsprechend den vorhergehenden Ausführungen jeweils z. B. 50 % der Einzelmesswerte gleich oder grösser als der Referenzwert sind, wobei andere Vorgaben hinsichtlich der relativen Verteilung ebenfalls möglich sind.

Das Verfahren kann weiter folgende Schritte aufweisen: optisches Abzweigen eines Anteils eines jeweiligen Lichtimpulses der Folge von Lichtimpulsen, Beaufschlagen eines optischen Referenz-Detektors mit den abgezweigten Anteilen der Folge von Lichtimpulsen, und Bilden einer Folge von Normierungs-Messwerten, wobei ein jeweiliger Normierungs-Messwert von einem zugehörigen Anteil eines abgezweigten Lichtimpulses bewirkt wird, wobei die normierten Einzelmesswerte durch Gewichten eines jeweiligen Einzelmesswerts mit einem zugehörigen Normierungs-Messwert gewonnen werden. Zum Gewichten kann beispielsweise ein jeweiliger Einzelmesswert durch seinen zugehörigen Normierungs-Messwert dividiert werden.

Die von Blitz bzw. Lichtimpuls zu Lichtimpuls auftretenden Schwankungen der Intensität der Lichtquelle können dadurch erfasst werden, dass durch den an geeigneter Stelle im Anregungspfad positionierten Streukörper ein kleiner Anteil des Lichtimpulses einem Referenz-Detektor zugeführt wird. Der Referenz-Detektor kann eine Photodiode sein. Mit den Signalen bzw. Normierungs-Messwerten des Referenz-Detektors können die Signale bzw. Messwerte des ersten optischen Detektors normiert werden. Zur Stellgrößennachführung werden dann nur der Mittelwert bzw. die Häufigkeitsverteilung der normierten Einzelmesswerte verwendet. Dabei wird angenommen, dass eine Empfindlichkeit des Referenz-Detektors praktisch driftfrei ist

Das erfindungsgemäße Verfahren kann sowohl zur Erstkalibrierung als auch zur routinemäßigen Rekalibrierung des optischen Messgeräts verwendet werden. Durch eine andere Vorgabe des Referenzwerts kann der Messbereich geändert werden. Wird z. B. statt 1.000 der Referenzwert 10.000 eingegeben, so erhält man durch die automatische Einstellung der Stellgröße automatisch einen 10-fach empfindlicheren kalibrierten Messbereich.

Das Verfahren ist sehr gut dazu geeignet, schnell die Funktionsbereitschaft praktisch aller kritischen Komponenten des optischen Messgeräts zu verifizieren, also u.a. der Lichtquelle, der Monochromatoren, der optischen Detektoren, aber auch eines Transportmechanismus. Dazu kann es einen Satz von Parametern und Einstellungen geben, welche für die routinemäßige Kalibrierung definiert sind, z. B. Wellenlänge und Spaltbreite der Monochromatoren oder Auswahl bestimmter Filter, wobei dieser Parametersatz ebenso wie der nachfolgende Kalibrierungsablauf mit einem einzigen Befehl aufgerufen werden kann. Man kann auf diese Weise in Sekundenschnelle eine Information darüber erhalten, ob das System messbereit ist oder nicht.

Das Verfahren kann weiter folgende Schritte aufweisen: Überprüfen, ob die veränderte Stellgröße einen Grenzwert überschreitet bzw. unterschreitet, und falls die veränderte Stellgröße den Grenzwert überschreitet bzw. unterschreitet, Signalisieren eines Fehlerfalls.

Weiter kann der Kalibriervorgang n-fach wiederholt werden (n = 1, ...), wobei bei jedem Wiederholen die veränderte Stellgröße abgespeichert wird, um eine Stellgrößenhistorie zu erzeugen.

Die durch den Kalibriervorgang ermittelte Stellgröße kann angezeigt und registriert werden. Ein "Logbuch" kann die historische Entwicklung der Stellgröße anzeigen. Es können Grenzwerte definiert werden, bei denen eine Warnung und gegebenenfalls ein Servicefall signalisiert wird.

Um zu unterscheiden, ob eine aufgetretene Drift vom Photomultiplier oder von der Lichtquelle herrührt, können bei einem Multilabel-Reader die Absorptions- oder die Referenzdiode herangezogen werden, welche praktisch driftfrei sind, sodass damit Drifts der Lichtquelle allein gemessen werden können.

Definiert man einen bestimmten Referenzwert als Ziel-Referenzwert, so kann man die damit erzielten Messresultate als RLU bezeichnen. Wählt man nun einen um einen beliebigen Faktor F höheren oder niedrigeren Ziel-Referenzwert, so muss man die damit gewonnenen Rohdaten um den Faktor F dividieren oder damit multiplizieren und die Resultate liegen dann auf der selben RLU-Skala. Das Verfahren erlaubt also die automatische Einstellung beliebiger und gleichzeitig in RLU kalibrierter Messbereiche. Liegt eine Kalibrierung in Reagenzienmengen oder Reagenzienkonzentrationen vor, so wird das System in den entsprechenden Einheiten, z. B. Nanomol Fluorescein kalibriert.

Der typische Benutzer eines erfindungsgemäßen optischen Messgerätes, beispielsweise eines Multilabel-Readers, sucht keine Ergebnisse in physikalischen Einheiten, sondern in Mengen oder Konzentrationen von Antigenen, Antikörpern oder einfach Labeln wie Fluorescein. Dazu ist mindestens eine einmalige Absolut-Kalibrierung, beispielsweise mit einer bekannten Konzentration von Fluorescein, notwendig. Die Erfindung bezieht sich also u. a. auf eine schnelle und automatische Rekalibrierung, welche sicherstellt, dass die Absolut-Kalibrierung auch bei nachfolgenden Messungen gilt, so dass nicht immer wieder neu kalibriert werden muss, um Instrumentendrifts auszugleichen, denn auch die wiederholte Herstellung bzw. Bereitstellung genauer und stabiler Reagenzienstandards kann sehr aufwendig sein.

Mit der im Folgenden beschriebenen Methode kann eine spektrale Intensitätsveränderung der Lichtquelle über der Zeit kompensiert werden.

Der erste optische Detektor kann ein Photomultiplier zur Fluoreszenzmessung sein, wobei das optische Messgerät mindestens einen zweiten optischen Detektor in Form eines Halbleiterdetektors, insbesondere in Form einer Photodiode, zur Absorptionsmessung und/oder Referenzmessung aufweisen kann.

Erfindungsgemäß wird im Anschluss an einen, insbesondere ersten, Kalibriervorgang mittels des zweiten optischen Detektors ein Referenz-Emissionsspektrum der Lichtquelle über einen interessierenden Wellenlängenbereich hinweg ermittelt, wobei Messwerte, die im Anschluss an den ersten bzw. weitere Kalibriervorgänge gewonnen werden, in Abhängigkeit von dem Referenz-Emissionsspektrum korrigiert werden.

Dieses Verfahren kann insbesondere dann eingesetzt werden, wenn das optische Messgerät im Anregungspfad einen Monochromator zur Wellenlängenselektion aufweist. Dann kann beispielswiese anfänglich ein Referenz-Emissionsspektrum der Lichtquelle gemessen werden, welches für nachfolgende Messungen als Referenz dienen kann. Hierzu ist lediglich der zweite optische Detektor mit Licht zu beaufschlagen, welches durch die Lichtquelle emittiert und durch den Monochromator wellenlängenselektiert wird, wobei der interessierende Wellenlängenbereich "durchfahren" wird.

Unter einem Emissionsspektrum kann beispielsweise eine gemessene Impulshöhe in Abhängigkeit von der mittels des Monochromators momentan eingestellten Wellenlänge über den interessierenden Wellenlängenbereich hinweg verstanden werden, gemessen mittels der Absorptionsdiode und/oder der Referenzdiode. Unter einer Impulshöhe kann auch ein für mehrere Lichtimpulse bzw. Blitze gemessener Mittelwert verstanden werden. Auf diese Weise kann für jede interessierende Wellenlänge der Fluoreszenzanregung ein Referenzwert für die Intensität der Anregungsstrahlung ermittelt werden.

Bei einer späteren Messung ist es dann möglich, für jede interessierende Wellenlänge die Abweichung der später gemessenen Intensität vom entsprechenden Referenzwert zu bestimmen und somit die Messergebnisse rechnerisch zu korrigieren. Mit anderen Worten kann das Referenz- oder Originalspektrum rechnerisch wiederhergestellt werden.

Es ist jedoch nicht notwendig, bei späteren Messungen das vollstände Spektrum zu messen, was zeitaufwendig wäre, sondern nur die jeweilige Anregungswellenlänge.

Eine rechnerische Korrektur der spektralen Intensitätsveränderung der Lichtquelle kann beispielsweise dadurch erfolgen, dass die (nach einer Rekalibration) gewonnenen Messwerte noch mit einem Verhältnis der Referenzintensität zu der bei der späteren Messung gemessenen Intensität bei derselben Wellenlänge, also beispielsweise der Anregungswellenlänge eines neuen Fluoreszenzsystems, multipliziert werden.

Das ermittelte Referenz-Emissionsspektrum der Lichtquelle kann nicht nur für die SpektralKorrektur, sondern auch zur Qualitätssicherung und zur Prüfung verwendet werden. Aus der Überlagerung von zu verschiedenen Zeiten aufgenommenen Spektren kann beispielsweise die gesamte ebenso wie die spektral unterschiedliche Drift verfolgt werden.

Erfindungsgemäß werden die in Multilabel-Readern stets vorhandenen Photodioden für die Absorptionsmessung verwendet, d.h. diese werden quasi "zweckentfremdet" zur Kalibrierung des Fluoreszenzdetektors anstatt wie üblich für die Absorptionsmessung eingesetzt.

Die Referenz-Häufigkeitsverteilung kann einer maximal möglichen Signalstärke entsprechen. Wenn beispielsweise die Referenzintensität die bei einer Messung maximal auftretende Intensität darstellt, beispielsweise weil die Referenz-Fluoreszenzprobe die "hellste" Probe auf der Mikroplatte ist, wird auf diese Weise der Messbereich im Sinne einer Auto-Range-Funktion automatisch optimal eingestellt, wobei die Referenzintensität die obere Messbereichsgrenze bildet. Dadurch, dass die Referenz-Häufigkeitsverteilung dem (theoretischen) maximalen Messwert entspricht, wird die Stellgröße so lange verändert, bis sich bei der anstehenden maximal möglichen Intensität (Referenzintensität) auch die zugehörigen maximalen Messwerte einstellen, so dass der dynamische Bereich automatisch optimal eingestellt wird. Wenn beispielsweise ein maximaler Messwert durch einen 16 Bit auflösenden A/D-Wandler bestimmt ist, kann die Referenz-Häufigkeitsverteilung durch einen Referenz-Wert von beispielsweise 65000 dargestellt werden, d.h. die Stellgröße wird so lange verändert, bis sich die Einzelmesswerte bei einem Wert von 65000 einpendeln. Der Referenz-Wert wird hierbei etwas unterhalb des maximal darstellbaren Werts von 65535 gewählt, so dass auch Werte oberhalb des Referenz-Wertes quantitativ erfasst werden können, um den Mittelwert aus über und unter dem Referenzwert liegenden Einzelwerten zu bestimmen.

Das erfindungsgemäße optische Messgerät ist zum Durchführen des oben beschriebenen Verfahrens ausgebildet. Das optische Messgerät kann ein Fluoreszenz-Messsystem sein, beispielsweise ein Mikroplatten-Fluorometer oder ein Multilabel-Reader. Das optische Messgerät weist auf: eine gepulste Lichtquelle, beispielsweise eine Xe-Blitzlampe, einen ersten optischen Detektor, beispielsweise einen Photomultiplier zur Fluoreszenzmessung, Mittel zum Einstellen von Referenzmessbedingungen für das optische Messgerät, Mittel zum Bilden einer Folge von Einzelmesswerten, wobei ein jeweiliger Einzelmesswert von einem zugehörigen Lichtimpuls der Folge von Lichtimpulsen bewirkt ist, Mittel zum Ermitteln einer Häufigkeitsverteilung einer Anzahl von Einzelmesswerten oder normierten Einzelmesswerten, und Mittel bzw. einen Regler zum Verändern einer Stellgröße des optischen Messgeräts in Abhängigkeit von der ermittelten Häufigkeitsverteilung derart, dass eine bei veränderter Stellgröße neu ermittelte Häufigkeitsverteilung einer Referenz-Häufigkeitsverteilung (Istwert) entspricht.

Als optischer Detektor kann ein Photomultiplier verwendet werden, der beispielsweise als Impulshöhenanalysator betrieben wird. Hierbei ist das Integral des Ausgangsstroms des Photomultipliers der Intensität des an der Kathode auftreffenden Lichtsignals proportional. Der Ausgangsstrom kann beispielsweise mittels eines Transimpedanz-Verstärkers in eine Signalspannung umgewandelt werden, wobei die Signalspannung linear weiter verarbeitet (verstärkt und gefiltert) wird.

Die Erfindung wird nachfolgend unter Bezugnahme auf die Zeichnung detailliert beschreiben. Hierbei zeigt schematisch:

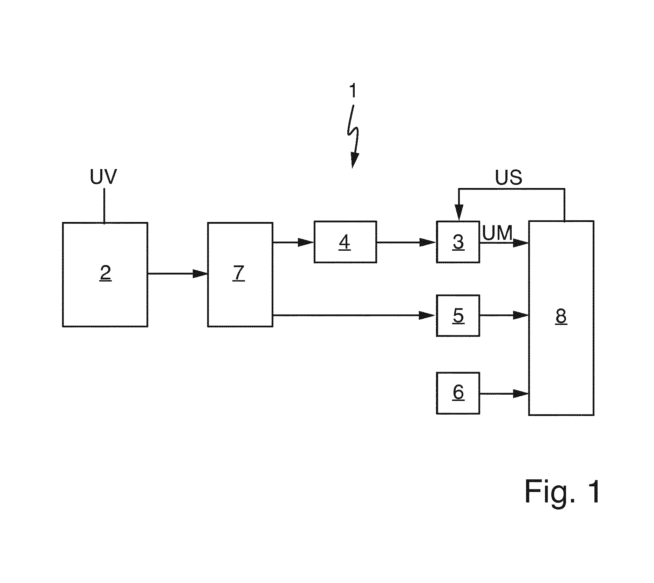

Fig. 1 ein optisches Messgerät in Form eines Multilabel-Readers.
Fig. 1 zeigt ein optisches Messgerät 1 in Form eines Multilabel-Readers. Das optische Messgerät weist eine herkömmliche gepulste bzw. pulsbare Lichtquelle 2 auf.

Das optische Messgerät weist weiter einen ersten optischen Detektor 3 in Form eines Photomultipliers auf, der herkömmlich zur Fluoreszenzmessungen dient. Das optische Messgerät 1 weist weiter einen optionalen zweiten optischen Detektor 5 in Form einer Photodiode auf, die als Referenz-Detektor dient. Das optische Messgerät weist weiter einen optionalen dritten optischen Detektor 6 in Form einer weiteren Photodiode auf, die als Absorptions-Detektor für Absorptionsmessungen dient.

Eine Lichtabzweigeeinheit 7 ist im optischen Pfad der Lichtquelle 2 nachgeschaltet, wobei die Lichtabzweigeeinheit 7 einen kleinen Anteil des von der Lichtquelle 2 emittierten Lichts abzweigt und dem Referenz-Detektor 5 zuführt. Ein Hauptanteil des von der Lichtquelle 2 emittierten Lichts wird einer Referenz-Fluoreszenzprobe 4 zugeführt. Alternativ kann das Bezugszeichen 4 einen Streukörper bezeichnen.

Die Referenz-Fluoreszenzprobe 4 kann beispielsweise auf einer nicht dargestellten, herkömmlichen Mikroplatte des Multilabel-Readers an einer vorgegebenen Probenposition der Mikroplatte angeordnet sein, wobei auf den weiteren Probenpositionen der Mikroplatte herkömmlich zu messende Proben angeordnet sein können.

Es versteht sich, dass Messgerät 1 weitere, nicht näher dargestellte, herkömmliche Komponenten aufweisen kann, beispielsweise wellenlängenselektive Monochromatoren bzw. bei Weißlicht optische Filter, usw.

Im Kalibriermodus des optischen Messgeräts 1 wird die Referenz-Fluoreszenzprobe 4 mit einer Folge von Lichtimpulsen angeregt, wobei das aufgrund der Anregung mittels der ReferenzFluoreszenzprobe 4 emittierte Licht am Photomultiplier 3 eine Referenzintensität aufweist. Wenn alternativ ein Streukörper anstatt der Referenz-Fluoreszenzprobe 4 verwendet wird, wird der Streukörper mit der Folge von Lichtimpulsen beaufschlagt, wobei das mittels des Streukörpers gestreute Licht am Photomultiplier 3 die Referenzintensität aufweist.

Eine automatische Kalibrierung des Messgeräts wird wie folgt automatisch durchgeführt.

Zunächst wird die Mikroplatte derart verfahren, dass die Referenz-Fluoreszenzprobe 4 in eine hierfür vorgesehene Messposition verfahren wird.

Danach wird mittels der Lichtquelle 2 eine Folge von Lichtimpulsen erzeugt. Die Lichtimpulse bewirken am ersten optischen Detektor bzw. Photomultiplier 3, dass Spannungspulse UM als korrespondierende Einzelmesswerte erzeugt werden, die beispielswiese noch geeignet digitalisiert und einem Mikroprozessor 8 zugeführt werden.

Im Mikroprozessor 8 wird über eine Anzahl von Einzelmesswerten ein arithmetischer Mittelwert gebildet. Der Mittelwert wird dann im Mikroprozessor 8 mit einem gespeicherten bzw. durch einen Benutzer vorgebbaren Referenz-Mittelwert verglichen. Falls der Mittelwert mit dem Referenz-Mittelwert in vorgegebenen Grenzen nicht übereinstimmt, bewirkt der Mikroprozessor 8, dass eine Stellgröße in Form einer Hochspannung US, mit der der Photomultiplier 3 versorgt ist, derart bzw. so lange verändert wird, dass bzw. bis ein bei veränderter Stellgröße mittels des Mikroprozessors 8 neu berechneter Mittelwert dem Referenz-Mittelwert innerhalb vorgegebener Grenzen entspricht. Sobald dies der Fall ist, wird der Kalibriermodus beendet und es kann sich ein herkömmlicher Betriebsmodus des optischen Messgeräts 1 anschließen. Im herkömmlichen Betriebsmodus des optischen Messgeräts 1 wird die Referenz-Fluoreszenzprobe 4 selbstverständlich aus dem optischen Messpfad entfernt.

Im Kalibiermodus wird folglich der Mittelwert auf den Referenz-Mittelwert (ein-) geregelt, wobei als Stellgröße die Hochspannung US dient.

Die mittels des optionalen Referenz-Detektors 5 erzeugten Normierungs-Messwerte können im Mikroprozessor zur Normierung der vom Photomultiplier 3 erzeugten Messwerte verwendet werden.

Der Absorptions-Detektor 6 kann neben der herkömmlichen Absorptionsmessung zusätzlich noch zu einer spektralen Driftkorrektur der Lichtquelle verwendet werden, wie weiter oben beschrieben ist.

Im Übrigen sei bezüglich der Funktionsweise des optischen Messgeräts 1 auf das weiter vorne beschriebene verwiesen, um Wiederholungen zu vermeiden.

## Patentansprüche

1. Verfahren zum automatischen Kalibrieren eines optischen Messgerätes (1), wobei das optische Messgerät (1) eine gepulste Lichtquelle (2) aufweist, mit den Schritten:
- Einstellen von Referenzmessbedingungen für das optische Messgerät (1),
- Erzeugen einer Folge von Lichtimpulsen mittels der gepulsten Lichtquelle (2),
- Bilden von Einzelmesswerten, wobei ein jeweiliger Einzelmesswert von einem zugehörigen Lichtimpuls der Folge von Lichtimpulsen bewirkt wird,
- Ermitteln einer Häufigkeitsverteilung der Einzelmesswerte oder einer Häufigkeitsverteilung von normierten Einzelmesswerten und
- Verändern einer Stellgröße (US) des optischen Messgeräts (1) in Abhängigkeit von der ermittelten Häufigkeitsverteilung derart, dass eine auf der veränderten Stellgröße basierende Häufigkeitsverteilung der Einzelmesswerte oder der normierten Einzelmesswerte einer Referenz-Häufigkeitsverteilung entspricht.

2. Verfahren nach Anspruch 1, **dadurch gekennzeichnet, dass**
- die Referenzmessbedingungen dadurch eingestellt werden, dass ein erster optischer Detektor (3) des optischen Messgeräts (1) mit Licht mit einer Referenzintensität beaufschlagt wird.

3. Verfahren nach Anspruch 2, **dadurch gekennzeichnet, dass**
- die Referenzintensität mittels einer Referenz-Fluoreszenzprobe (4) erzeugt wird, wobei die Referenz-Fluoreszenzprobe (4) mit der Folge von Lichtimpulsen angeregt wird, wobei das aufgrund der Anregung mittels der Referenz-Fluoreszenzprobe (4) emittierte Licht am ersten optischen Detektor (3) die Referenzintensität aufweist.

4. Verfahren nach Anspruch 2 oder 3, **dadurch gekennzeichnet, dass**
- die Referenzintensität mittels eines Streukörpers erzeugt wird, wobei der Streukörper mit der Folge von Lichtimpulsen beaufschlagt wird, wobei das mittels des Streukörpers gestreute Licht am ersten optischen Detektor (3) die Referenzintensität aufweist.

5. Verfahren nach einem der vorhergehenden Ansprüche, **dadurch gekennzeichnet, dass**
- der erste optische Detektor (3) ein Photomultiplier oder ein Silizium-Photomultiplier ist, wobei die Stellgröße eine Versorgungsspannung (US) des Photomultipliers oder eine Biasspannung des Silizium-Photomultipliers ist.

6. Verfahren nach einem der vorhergehenden Ansprüche, **dadurch gekennzeichnet, dass**
- die Stellgröße eine Versorgungsspannung (UV) der gepulsten Lichtquelle (2) oder ein Verstärkungsfaktor eines elektronischen Signalverstärkers ist.

7. Verfahren nach einem der vorhergehenden Ansprüche, **dadurch gekennzeichnet, dass**
- die Stellgröße eine Spalteinstellung eines Monochromators ist.

8. Verfahren nach einem der vorhergehenden Ansprüche, **gekennzeichnet durch** die Schritte:
- optisches Abzweigen von Anteilen der Folge von Lichtimpulsen,
- Beaufschlagen eines optischen Referenz-Detektors (5) mit den abgezweigten Anteilen, und
- Bilden einer Folge von Normierungs-Messwerten basierend auf den abgezweigten Anteilen,
- wobei die normierten Einzelmesswerte **durch** Gewichten eines jeweiligen Einzelmesswerts mit einem zugehörigen Normierungs-Messwert gewonnen werden.

9. Verfahren nach einem der vorhergehenden Ansprüche, **gekennzeichnet durch** die Schritte:
- Überprüfen, ob die veränderte Stellgröße (US) innerhalb eines zulässigen Bereichs liegt, und
- falls die veränderte Stellgröße nicht innerhalb des zulässigen Bereichs liegt, Signalisieren eines Fehlerfalls.

10. Verfahren nach einem der vorhergehenden Ansprüche, **gekennzeichnet durch** die Schritte:
- n-faches Wiederholen des Kalibriervorgangs, wobei bei jedem Wiederholen die veränderte Stellgröße abgespeichert wird, um eine Stellgrößenhistorie zu erzeugen.

11. Verfahren nach einem der vorhergehenden Ansprüche, wobei der erste optische Detektor (3) ein Photomultiplier zur Fluoreszenzmessung ist, wobei das optische Messgerät (1) mindestens einen zweiten optischen Detektor (6) in Form eines Halbleiterdetektors, insbesondere in Form einer Photodiode, zur Absorptionsmessung und/oder Referenzmessung aufweist, **dadurch gekennzeichnet, dass**
- im Anschluss an einen, insbesondere ersten, Kalibriervorgang mittels des zweiten optischen Detektors (6) ein Referenz-Emissionsspektrum der Lichtquelle (2) ermittelt wird, wobei Messwerte, die im Anschluss an weitere Kalibriervorgänge gewonnen werden, in Abhängigkeit von dem Referenz-Emissionsspektrum korrigiert werden.

12. Verfahren nach einem der vorhergehenden Ansprüche, **dadurch gekennzeichnet, dass**
- die Referenz-Häufigkeitsverteilung einer maximal möglichen Signalstärke entspricht.

13. Optisches Messgerät (1), das zum Durchführen eines Verfahrens nach einem der vorhergehenden Ansprüche ausgebildet ist, aufweisend:
- eine gepulste Lichtquelle (2),
- einen ersten optischen Detektor (3),
- Mittel (4) zum Einstellen von Referenzmessbedingungen für das optische Messgerät (1),
- Mittel zum Bilden einer Folge von Einzelmesswerten, wobei ein jeweiliger Einzelmesswert von einem zugehörigen Lichtimpuls der Folge von Lichtimpulsen bewirkt ist,
- Mittel (8) zum Ermitteln einer Häufigkeitsverteilung der Einzelmesswerte oder der normierten Einzelmesswerte, und
- Mittel (8) zum Verändern einer Stellgröße (US) des optischen Messgeräts (1) in Abhängigkeit von der ermittelten Häufigkeitsverteilung derart, dass eine auf der veränderten Stellgröße (US) basierende Häufigkeitsverteilung der Einzelmesswerte oder der normierten Einzelmesswerten einer Referenz-Häufigkeitsverteilung entspricht.
